# EUROPÄISCHE PATENTSCHRIFT

(11) **EP 2 188 104 B1**
(45) Veröffentlichungstag und Bekanntmachung des Hinweises auf die Patenterteilung: **20.04.2011**
(21) Anmeldenummer: 08802174.6
(22) Anmeldetag: 05.09.2008
(51) Int. Cl.: B29C 47/04, B29C 47/22

(54) **VERFAHREN UND VORRICHTUNG ZUR HERSTELLUNG VON KUNSTSTOFF-BEHÄLTERN**
METHOD AND DEVICE FOR THE PRODUCTION OF PLASTIC CONTAINERS
PROCÉDÉ ET DISPOSITIF DE FABRICATION DE RÉCIPIENTS EN PLASTIQUE

(30) Priorität: 21.09.2007 DE 202007013318 U
(43) Veröffentlichungstag der Anmeldung: 26.05.2010
(73) Patentinhaber: Mauser-Werke GmbH, 50321 Brühl (DE)
(72) Erfinder: JACOBS, Jan, Peter, 53797 Lohmar (DE); KEUSCH, Stefan, 50321 Brühl (DE)
(86) Internationale Anmeldenummer: PCT/EP2008/007627
(87) Internationale Veröffentlichungsnummer: WO 2009/040009

(56) Entgegenhaltungen:
- EP-A- 0 333 956
- EP-A- 0 491 093
- DE-U1- 9 107 812
- US-A- 5 088 909

## Beschreibung

Die Erfindung betrifft ein Verfahren nach dem Anspruch 8 und eine Vorrichtung zur Herstellung von blasgeformten zwei- oder mehrschichtigen Behältern aus thermoplastischem Kunststoff und danach hergestellte Kunststoff-Behälter mit Sichtstreifen nach dem Anspruch 1, insbesondere zur Lagerung und zum Transport von flüssigen Füllgütern.
Ein derartiger Kunststoffbehälter weist in aller Regel vertikal verlaufende Behälterwandungen mit horizontal verlaufendem Behälteroberboden und -unterboden auf, wobei wenigstens im Behälteroberboden bzw. im Behälterdeckel eine gas- und flüssigkeitsdicht verschließbare Einfüll- und Entleerungsöffnung angeordnet ist.
Der Kunststoffbehälter kann z. B. als Kanister, Fassett, Spundfass, Deckelfass mit Fassdeckel und Spannringverschluss oder als großvolumiger Innenbehälter eines Palettencontainers ausgebildet sein, wobei dieser üblicherweise mit einer unteren Entnahmearmatur ausgestattet ist.

### Stand der Technik :

Oftmals sind Kunststoff-Behälter - bei Mehrschichtbehältern zumindest in der äußeren Schicht - farblich eingefärbt, wie z. B. blaue Spundfässer oder schwarze, mit Leitruß eingefärbte Kunststoffbehälter mit elektrisch ableitbarer Außenschicht.

Bei Kunststoff-Behältern mit eingefärbter Außenschicht ist es wünschenswert, jederzeit den jeweiligen Füll- bzw. Entleerungszustand des Behälters erkennen zu können. Dazu sind farbige Kunststoff-Behälter üblicherweise mit einem schmalen vertikal verlaufenden Sichtstreifen aus naturfarbenen (Virgin)-Kunststoff versehen, durch den der jeweilige Füllstand des Füllgutes im Behälter gut zu erkennen ist. Die Herstellung von Kunststoff-Behältern mit Sichtstreifen nach dem Blasformverfahren ist jedoch einigermaßen aufwendig und erfordert eine entsprechende zusätzliche maschinelle Ausstattung des Extrusionskopfes (kontinuierlich oder diskontinuierlich) und einen entsprechenden separaten Extruder für das Sichtstreifenmaterial.

Ein anderes Anwendungsgebiet bezieht sich auf die Lagerung und den Transport von brennbaren Flüssigkeiten. Beim Befüllen und Entleeren z. B. eines Palettencontainers (DE 196 05 890 A1; Sch 19.02.96) oder allgemein beim Rühren von Flüssigkeiten in Kunststoff-Behältern zu Mischzwecken o. ä., werden durch Flüssigkeitsreibung an der inneren Behälteroberfläche auftretende elektrische Ladungen mittels elektrisch leitender Verbindung über eine elektrisch leitfähige Außenbeschichtung des Innenbehälters und das metallische Untergestell (Stahlpalette) in den Boden abgeleitet. Elektrische Entladungen mit einer Funkenbildung zwischen dem Kunststoff-Innenbehälter und dem Metallgittermantel, die zu einer Entzündung von feuergefährlichen Füllgütern des Palettencontainers sowie von explosionsfähigen Gemischen von Gasen und Dämpfen in geschlossenen Räumen führen können, sind somit ausgeschlossen. Ein Nachteil des bekannten Palettenbehälters besteht darin, daß er keinen Sichtstreifen aufweist und aufgrund der schwarzen Farbgebung des Kunststoff-Innenbehälters eine optische Füllstandskontrolle nicht möglich ist.
Bei einem aus der DE 38 44 605 (Sch. 11.06.88) bekannten Palettencontainer ist mindestens ein Sichtstreifen aus durchscheinendem bzw. durchsichtigen Kunststoffmaterial bekannt, das mit dem schwarz eingefärbten Kunststoffmaterial eine Einheit bildet; neben dem Sichtstreifen ist eine Füllstandsanzeige vorgesehen. Für die Herstellung des Kunststoffbehälters mit eingesetztem Sichtstreifen ist die übliche aufwendige apparative Ausstattung erforderlich.

Aus der DE 41 36 766 (Ro. 08.11.91) ist eine mehrschichtige Behälterwandung mit äußerer eingefärbter Behälter-Mantelschicht mit streifenförmig ausgeformtem Schichtunterbrechungsbereich bekannt. Der streifenförmige Schichtunterbrechungsbereich ist stoffschlüssig mit dem eingefärbten Kunststoffmaterial der Behälterwandung verbunden. Die hierzu entsprechende Vorrichtung zur diskontinuierlichen Herstellung eines schlauchförmigen Vorformlings für das Blasformen der Behälter ist in der Druckschrift DE-U-91 07 812 beschrieben.
Ein weiterer Palettencontainer mit mehrschichtigem Innenbehälter, mit rußgeschwärzter dauerantistatischer Außenschicht mit mindestens einem integrierten Sichtstreifen aus durchsichtigem Kunststoffmaterial ist aus der DE 202 06 436 (Pro. 23.04.02) bekannt. Eine Vorrichtung zur Herstellung von Kunststoff-Behältern mit Sichtstreifen in der Ausführungsform eines Mehrschicht-Extrusionskopfes gemäβ dem Oberbegriff des Anspruchs 1, ist z.B. aus der EP-A-0 491 093 (Hoover) bekannt. Bei diesem Extrusionskopf wird der umfangsverteilte, blau oder schwarz eingefärbte Schlauch über die gesamte Wanddicke von einem Schneidelement aufgeschnitten bzw. aufgespalten. Auf der Unterseite des Scheidelementes wird aus einem separaten Extruder ein durchsichtiges Kunststoffmaterial zugeführt und in den Spalt im Schlauch eingeführt.

Nachteile des Standes der Technik : Alle bekannten mehrschichtigen Ausführungsformen haben einen durchgehenden Sichtstreifen, der aus dem farblosen Kunststoffmaterial der Innenschicht besteht. Eine derartige Herstellung des Sichtstreifens ist vorrichtungsmäßig und verfahrenstechnisch recht aufwendig. So muss bei Zuordnung von Sichtstreifen und Volumenskala die Umfangsposition des Schichtstreifens des Innenbehälters genau mit der Umfangsposition der Volumenskala abgestimmt werden. Auch ein genauer vertikaler Verlauf des Sichtstreifens auf dem Innenbehälter ist aufgrund unterschiedlicher Streckungsgrade beim Blasformen in der Fertigung des Innenbehälters schwierig einzuhalten.
Es ist daher Aufgabe der vorliegenden Erfindung, eine entsprechende Vorrichtung und ein Verfahren anzugeben, mittels derer ein eingefärbter Kunststoff-Behälter mit Sichtstreifen einfach und kostengünstig herstellbar ist, wobei kein zusätzlicher Extruder mit schmelzflüssigem Kunststoff führenden Leitungen für das Material des Sichtstreifens benötigt wird. Weiterhin soll die efindungsgemäße Vorrichtung konstruktiv einfach sein mit der Möglichkeit, auch nachträglich in vorhandene Mehrschicht-Extrusionsköpfe einbaubar zu sein.

Diese Aufgabe wird erfindungsgemäß mit den Merkmalen gemäβ dem Kennzeichnenden Teil des Patentanspruches 1 gelöst. Verfahrenstechnisch wird dabei farbloses Kunststoffmaterial aus der inneren Schicht im Ringspalt des Extrusionskopfes kurz vor dem Materialaustritt aus der Ringdüse mittels einer geeigneten Vorrichtung partiell abgezogen, in Radialrichtung umgelenkt und umgeleitet und in die aufgetrennte äußere Schicht eingefügt (transfer of virgin material from the inner layer into the outer layer).
Die nachfolgenden Unteransprüche beinhalten zweckmäßige Weiterbildungen der Erfindung.
Vorrichtungsmäßig umfasst die Erfindung einen Extrusionskopf zur Herstellung von blasgeformten mehrschichtigen Kunststoffhohlkörpern, mit einem Gehäuse, an welchem zwei oder mehrere Anschlüsse für zwei oder mehrere Extruder vorgesehen sind, über welche verschiedene schmelzflüssige Kunststoffmaterialien zugeführt werden, die über zwei oder mehrere Umfangsverteiler zu einem zwei- oder mehrschichtigen schlauchförmigen Vorformling umfangsverteilt werden, wobei der schlauchförmige Vorformling einen zylinderförmigen Speicherraum durchströmt, mit einem Sichtstreifen versehen und über eine steuerbare Ringdüse ausgestoßen wird, wobei seitlich an dem Gehäuse des Extrusionskopfes unterhalb der Umfangsverteiler und oberhalb der Ringdüse ein weiterer Anschluss vorgesehen ist, durch welchen ein Hohlrohr in den zylinderförmigen Speicherraum eingesteckt ist, das innenseitig in dem Speicherraum eine nach oben weisende Eingangsöffnung und außenseitig in dem Speicherraum eine nach unten weisende Ausgangsöffnung aufweist, durch welche Kunststoffmaterial aus der inneren Schicht zum Einbringen des Sichtstreifens in die farbige äußere Schicht des schlauchförmigen Vorformlings umlenk- und einlagerbar ist.

In Ausgestaltung der Erfindung ist innerhalb des Hohlrohres eine mit einem Antrieb versehene Schneckenwendel zum Fördern von Kunststoffmaterial vorgesehen. Dadurch kann die aus der inneren Schicht des schlauchförmigen Vorformlings abgezogene Menge an Kunststoffmaterial auf einfache Weise geregelt und verändert werden. Der Antrieb für die Schneckenwendel kann beispielsweise mittels Hydromotor oder Elektromotor erfolgen.
In weiterer Ausgestaltung der Erfindung ist vorgesehen, daß das Hohlrohr aus dem Gehäuse herausziehbar und der entsprechende weitere Anschluss mittels eines aufgesetzten Deckels oder Blindstopfens verschließbar ausgebildet ist. So können je nach Bedarf mit dem erfindungsgemäßen Extrusionskopf Kunststoffbehälter mit oder ohne Sichtstreifen gefertigt werden.
In vorteilhafter Weise ist das Hohlrohr mit angetriebener Schneckenwendel als sehr preiswerter Nachrüstsatz ausgebildet, der in jeden vorhandenen Extrusionskopf einbaubar ist. Dabei kann der Extrusionskopf als kontinuierlicher Schlauchkopf oder Konti-Kopf oder als diskontinuierlicher Extrusionskopf mit Ausstoßkolben (= Speicherkopf, Akku-Kopf) ausgebildet sein. So können Hersteller von blasgeformten KunststoffHohlkörpern auf einfache und kostengünstige Weise ihre vorhandenen Blasformmaschinen derart aufrüsten, daß - je nach Bedarf - verschiedenartige Kunststoffbehälter wie z. B. Kunststoff-Spundfässer oder Deckelfässer mit oder ohne Sichtstreifen gefertigt werden können, ohne daß dafür eine kostenintensive Ausstattung mit zusätzlichem Extruder benötigt wird.
In weiterer Ausgestaltung der Erfindung ist vorgesehen, daß das Hohlrohr mit Schneckenwendel in Radialrichtung verschiebbar ausgebildet ist und dazu in vorteilhafter Weise mit einem entsprechenden Antrieb zum Verschieben in Radialrichtung ausgestattet ist.
Verfahrensmäßig wird gemäß der Erfindung im Extrusionskopf innerhalb des zylinderförmigen Speicherraumes schmelzflüssiges Kunststoffmaterial aus der inneren Schicht zum Einbringen des Sichtstreifens in die farbige äußere Schicht umgelenkt und eingelagert. Dabei kann bei Bedarf das Umlenken und Einlagern des schmelzflüssigen Kunststoffmaterials aus der inneren Schicht zum Einbringen des Sichtstreifens in die farbige äußere Schicht auch nur sequenziell (diskontinuierlich) derart erfolgen, daß der Sichtstreifen nur in der vertikalen Wandung und nicht im Ober- und Unterboden des fertig geblasenen Behälters angeordnet ist.

Weitere Vorteile : Aufgrund der Materialumlenkung von innen nach außen innerhalb der Schlauchwandung des Vorformlings gibt es auch innerhalb der Wandung des fertig geblasenen Produktes keine der sonst üblichen durchgehenden Trennlinien (vertikal verlaufende Trennlinien in der Behälterwandung), so daß es daher auch keine nachteiligen Beeinflussungen auf die Leistungsdaten (wie z. B. Falltest, hydr. Innendrucktest etc.) des fertigen Behälters gibt. Die innere Oberfläche des Schlauches bzw. des fertigen Behälters bleibt unversehrt und wird nicht aufgetrennt.
Mit einem erfindungsgemäßen Extrusionskopf mit eingesetztem Hohlrohr und angetriebener Schneckenwendel können Behälter in verschiedenen Volumengrößen von ca. 60 bis 1000 Liter wie z. B. Kanister, Fässer oder großvolumige Kunststoff-Innenbehälter für Palettencontainer gefertigt werden. Ein zusätzlicher Extruder oder ein zusätzlicher Massespeicher (für eine sequenzielle Fahrweise) ist dazu nicht erforderlich.

Die Erfindung wird nachfolgend anhand eines in den Zeichnungen schematisch dargestellten Ausführungsbeispieles näher erläutert und beschrieben. Es zeigen :
- Figur 1: einen erfindungsgemäßen Extrusionskopf mit schematisch angedeutetem Schmelze-Querförderer,

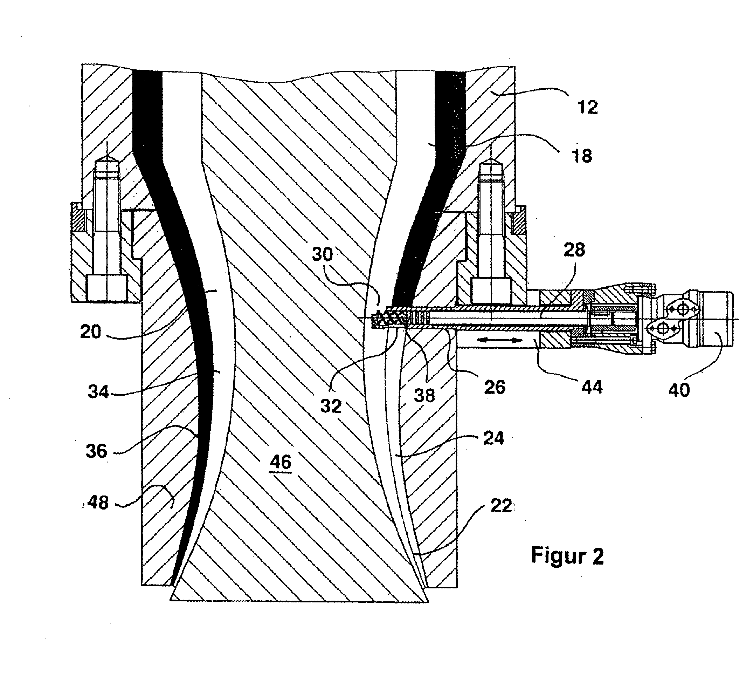

- Figur 2: den unteren Teil eines erfindungsgemäßen Extrusionskopfes mit Schmelze-Querförderer in vergrößerter Darstellung,
- Figur 3: ein Kunststoff-Deckelfass mit Sichtstreifen und
- Figur 4: einen großvolumigen Kunststoff-Innenbehälter mit Sichtstreifen

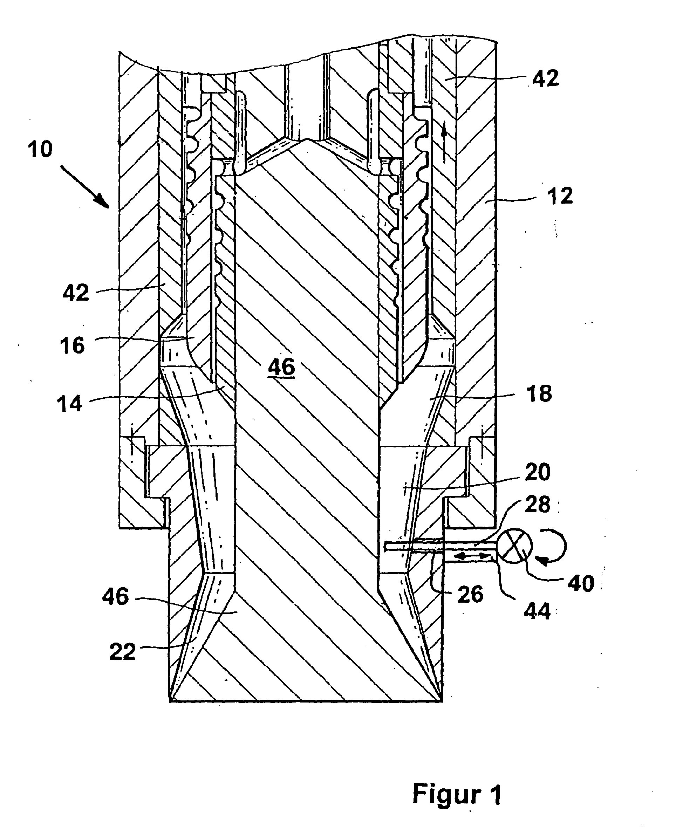

In Figur 1 ist mit der Bezugsziffer 10 ein Extrusionskopf zur Herstellung von blasgeformten zweischichtigen Kunststoff-Hohlkörpern in der Ausführungsform eines Speicherkopfes (Akkukopf) mit einem Gehäuse 12 dargestellt, an welchem (in der Teildarstellung nicht gezeichnet) zwei Anschlüsse für zwei Extruder vorgesehen sind.
Aus den angeschlossenen Extrudern werden zwei Umfangsverteiler 14, 16 mit schmelzflüssigem Kunststoffmaterial versorgt. Die beiden Umfangsverteiler 14, 16 sind als konzentrische Zylinderhülsen mit eingearbeiteten Wendelkanälen zur Umfangsverteilung der aus den Extrudern jeweils in einem Vollstrang zufließenden Kunststoffmaterialströme ausgebildet. Der Umfangsverteiler 16 wird noch von einer weiteren Zylinderhülse 42 abgedeckt. Die drei konzentrischen Zylinderhülsen 14, 16, 42 mit innenliegenden, bzw. abgedeckten Wendelkanälen sind gegeneinander fixiert und bilden zusammen den sogenannten Ausstoßkolben. Der Ausstoßkolben umschließt einen zentralen Dorn 46 und ist vertikal verschiebbar in dem Gehäuse gelagert und dazu mit einem entsprechenden Ausstoßantrieb versehen.
Am unteren Ende der Zylinderhülsen bzw. des Ausstoßkolbens tritt das vollständig über den Umfang verteilte Kunststoffmaterial als zweischichtiger schlauchförmiger Vorformling 18 aus, durchströmt einen zylinderförmigen Speicherraum 20, in welchem während des Extrusionsvorganges ein Sichtstreifen 24 eingearbeitet wird, und wird schließlich über eine steuerbare Ringdüse 22 aus dem Extrusionskopf 10 ausgestoßen. Bei der diskontinuierlichen Betriebsweise des Speicherkopfes wird der schlauchförmige Vorformling 18 mittels des Ausstoßkolbens sequenziell aus dem Speicherraum 20 über die steuerbare Ringdüse 22 ausgestoßen. Der zentrale Dorn 46 ist gleichfalls verschiebbar in dem Gehäuse 12 angeordnet. Durch Herunterfahren der kegelförmigen Dornspitze wird der Düsenspalt der Ringdüse 22 geöffnet und verbreitert; bei Hochfahren der kegelförmigen Dornspitze verengt sich der Düsenspalt und kann ganz geschlossen werden. Der Extrusionskopf 10 kann selbstverständlich auch als kontinuierlicher Extrusionskopf mit kontinuierlichem Schlauchaustritt konzipiert sein. Gemäß der vorliegenden Erfindung ist innerhalb des Speicherraumes 20, unterhalb der Umfangsverteiler 14, 16 und oberhalb der steuerbaren Ringdüse 22 eine besondere Vorrichtung angeordnet, in welcher eine Materialumverteilung vorgenommen wird. Diese Materialumverteilung erfolgt mittels eines Hohlrohres 28 derart, daß in Radialrichtung von innen nach außen Kunststoffmaterial aus der inneren, aus originärem Naturmaterial bestehenden Schicht 34 des an sich fertigen Vorformlings 18 zunächst abgezogen, in Radialrichtung umgelenkt und nach außen geführt wird, und dann wieder in Axialströmungsrichtung umgelenkt und als durchsichtiger Sichtstreifen in die äußere eingefärbte Schicht 36 des Vorformlings 18 eingefügt wird.
Durch die partielle Materialumverteilung ergeben sich in einem lokalen Bereich um den eingefügten Sichtstreifen leichte Veränderungen der Schichtdicken (Abnahme der inneren Schicht und Zunahme der äußeren Schicht), die jedoch im fertigen Produkt völlig unerheblich sind und keinerlei nachteiligen Einfluss auf die mechanischen Leistungswerte (Innendrucktest, Fallfestigkeit, Stapelbelastbarkeit) des Behälters haben.
Bei bestimmten Behälterausführungen wie z. B. bei geschlossenen Spundfässern mit hohen Streckungsgraden des schlauchförmigen Vorformlings in Bereichen, die um 90° versetzt zu der Formtrennnahtebene in den Blasformhälften angeordnet sind, ist es wünschenswert, den Sichtstreifen einer besonderen Umfangsposition zuordnen zu können. Zu diesem Zweck ist das untere Gehäuseteil 48, in welchem das Hohlrohr 28 zum Einbringen des Sichtstreifens 24 angeordnet ist, verdrehbar am Gehäuse 12 des Extrusionskopfes befestigt, so daß der Sichtstreifen im ausgestoßenen Vorformling exakt in einer gewünschten Lage, z. B. der Formtrennnahtebene positioniert werden kann. Das untere Gehäuseteil 48 kann auch mit einem Stellmotor versehen sein, mit dem die Verdrehung des unteren Gehäuseteils in beide Drehrichtungen und damit die Position des Sichtstreifens in Bezug auf die Blasform bzw. seine Lage im aufgeblasenen Behälter eingestellt werden kann.

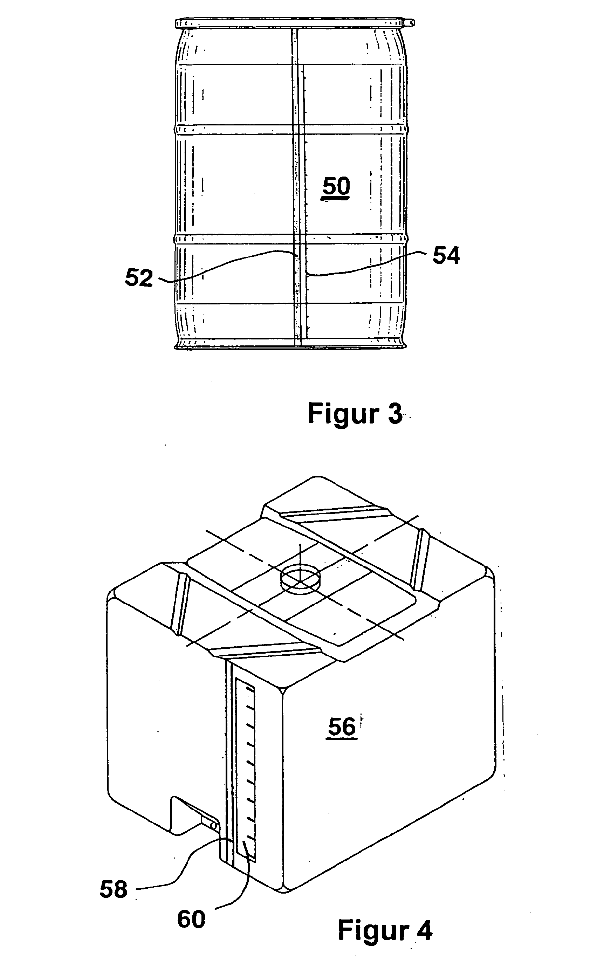

In einer gebauten Ausführungsform mittlerer Größe weist das in das untere Gehäuseteil 48 eingesetzte Hohlrohr 28 einen äußeren Durchmesser von ca. 45 mm auf und ragt etwa 50 mm tief in den Speicherraum 20 hinein. Die obere Öffnung 30 ist ca. 30 mm breit und ebenso lang, während die untere Öffnung 32 etwa 35 mm lang aber nur 10 mm breit ist. Die Schneckenwendel 38 ist vorzugsweise als zweigängige Wendel ausgelegt und weist eine Länge von lediglich ca. 55 mm auf. Nach außen hin ist das Hohlrohr 28 hinter der Schneckenwendel 38 an deren Antriebswelle vollständig über entsprechende Dichtungsringe abgedichtet.
Bei eingefärbten Behältern mit zwei- oder dreischichtigem Wandungsaufbau ist die mittels eingemischter Farbpigmente oder mittels Leitruß eingefärbte Außenschicht vergleichsweise dünn ausgeführt, da die Farbpigmente bzw. der Leitruß vergleichsweise teuer sind. So ist es vorteilhaft, wenn die eingefärbte Außenschicht lediglich 5 bis 20 %, vorzugsweise ca. 10 %, der Behälterwandung aufweist.
Die Schichtdicke der inneren, aus Neumaterial (HD-PE High Density Poly Ethylen) bestehende Schicht soll eine Dicke von 50 % nicht unterschreiten. Bei dreischichtigem Wandungsaufbau besteht die mittlere Schicht bei einer Schichtdicke zwischen 20 % bis 60 % in aller Regel aus einem Polyethylen hoher Dichte, wobei recyceltes Granulat oder Mahlgut verwendet wird (farbloses bzw. naturfarbenes HD-PE).
Für den Einsatz in explosionsgefährdeten Bereichen bzw. für eine Verwendung für brennbare Füllgüter sind die Kunststoff-Behälter mit einer - durch Zumischen von Leitruß - schwarzen, elektrisch leitenden Außenschicht ausgestattet. Auch diese Außenschicht sollte schon aus Kosteneinsparungsgründen möglichst dünn ausgebildet sein.
Als Ausführungsbeispiel eines nach dem erfindungsgemäßen Verfahren hergestellten blasgeformten Behälters ist in Figur 3 ein 220 Liter Kunststoff-Deckelfass 50 mit Sichtstreifen 52 und Messskala 54 in der vertikalen Fasswandung dargestellt.
Figur 4 zeigt ein anderes Ausführungsbeispiel in Gestalt eines großvolumigen Kunststoff-Innenbehälters 56 mit Sichtstreifen 58 und Messskala 60 für einen Palettencontainer mit einem Fassungsvermögen von 1000 Litern.

Der Sichtstreifen soll - in Umfangsrichtung betrachtet - eine Breite von ca. 10 mm bis 20 mm aufweisen, so daß der jeweilige Füllstand des flüssigen Füllgutes jederzeit gut erkennbar ist.

**Bezugsziffernliste**
- **10**: Extrusionskopf
- **12**: Gehäuse
- **14**: Umfangsverteiler I innen
- **16**: Umfangsverteiler II außen
- **18**: Vorformling
- **20**: Speicherraum
- **22**: Ringdüse
- **24**: Sichtstreifen
- **26**: weiterer Anschluss (28)
- **28**: Hohlrohr
- **30**: Eingangsöffnung
- **32**: Ausgangsöffnung
- **34**: innere Schicht
- **36**: äußere Schicht
- **38**: Schneckenwendel
- **40**: Dreh-Antrieb (38)
- **42**: Abdeck-Zylinderhülse
- **44**: Verschiebe-Antrieb (28)
- **46**: Zentral-Dorn
- **48**: unteres Gehäuseteil (drehbar)
- **50**: Kunststoff-Deckelfass
- **52**: Sichtstreifen
- **54**: Messskala
- **56**: Kunststoff-Innenbehälter
- **58**: Sichtstreifen
- **60**: Messskala

## Patentansprüche

1. Extrusionskopf (10) zur Herstellung von blasgeformten mehrschichtigen Kunststoff-Hohlkörpern, mit einem Gehäuse (12), an welchem zwei oder mehrere Anschlüsse für Extruder vorgesehen sind, über welche schmelzflüssiges Kunststoffmaterial zugeführt wird, das über zwei oder mehrere Umfangsverteiler (14, 16) zu einem zwei- oder mehrschichtigen schlauchförmigen Vorformling (18) umfangsverteilt wird, der einen zylinderförmigen Speicherraum (20) durchströmt und über eine steuerbare Ringdüse (22) ausstossbar ist, wobei der ausgestoßene schlauchförmige Vorformling (18) mit einem Sichtstreifen (24) versehen ist,
**dadurch gekennzeichnet, daß**
seitlich an dem Gehäuse (12) unterhalb der Umfangsverteiler (14, 16) und oberhalb der Ringdüse (22) ein weiterer Anschluss (26) vorgesehen ist, durch welchen ein Hohlrohr (28) in den zylinderförmigen Speicherraum (20) eingesteckt ist, das innenseitig innerhalb des Speicherraumes (20) eine nach oben weisende Eingangsöffnung (30) und außenseitig in dem Speicherraum (20) eine nach unten weisende Ausgangsöffnung (32) aufweist, durch welche Kunststoffmaterial aus der inneren Schicht (34) zum Einbringen des Sichtstreifens (24) in die farbige äußere Schicht (36) umlenk- und einlagerbar ist.

2. Extrusionskopf nach Anspruch 1,
**dadurch gekennzeichnet, daß**
innerhalb des Hohlrohres (28) eine mit einem Antrieb (40) versehene Schneckenwendel (38) zum Fördern von Kunststoffmaterial vorgesehen ist.

3. Extrusionskopf nach Anspruch 1 oder 2,
**dadurch gekennzeichnet, daß**
das Hohlrohr (28) aus dem Gehäuses (12) herausziehbar und der entsprechende weitere Anschluss (26) mittels eines aufgesetzten Deckels oder Blindstopfens verschließbar ausgebildet ist.

4. Extrusionskopf nach Anspruch 1, 2 oder 3,
**dadurch gekennzeichnet, daß**
das Hohlrohr (28) mit Schneckenwendel (38) und Antrieb (40) als Nachrüstsatz ausgebildet ist, das in jeden vorhandenen Extrusionskopf einbaubar ist.

5. Extrusionskopf nach Anspruch 1, 2, 3 oder 4,
**dadurch gekennzeichnet, dass**
das Hohlrohr (28) mit Schneckenwendel (38) in Radialrichtung verschiebbar ausgebildet ist.

6. Extrusionskopf nach Anspruch 5,
**dadurch gekennzeichnet, dass**
das Hohlrohr (28) mit Schneckenwendel (38) mit einem Antrieb (44) zum Verschieben in Radialrichtung ausgestattet ist.

7. Extrusionskopf nach Anspruch 1, 2, 3, 4, 5 oder 6,
**dadurch gekennzeichnet, dass**
das untere Gehäuseteil (48) mit eingesetztem Hohlrohr (28) mit Schneckenwendel (38) in beide Drehrichtungen verdrehbar am Gehäuse (12) befestigt ist.

8. Verfahren zur Herstellung von blasgeformten mehrschichtigen Kunststoff-Hohlkörpern bei dem zwei oder mehrere schmelzflüssige Kunststoffmaterialien aus entsprechenden Extrudern in einen Extrusionskopf (10) eingespeist werden, die über zwei oder mehrere Umfangsverteiler (14, 16) zu einem zwei- oder mehrschichtigen schlauchförmigen Vorformling (18) umfangsverteilt werden, wonach der mehrschichtige schlauchförmige Vorformling (18) einen zylinderförmigen Speicherraum (20) durchströmt, mit einem Sichtstreifen (24) versehen und über eine steuerbare Ringdüse (22) ausgestoßen wird,
**dadurch gekennzeichnet, dass**
innerhalb des zylinderförmigen Speicherraumes (20) schmelzflüssiges Kunststoffmaterial aus der inneren Schicht (34) zum Einbringen des Sichtstreifens (24) in die farbige äußere Schicht (36) umgelenkt und eingelagert wird.

9. Verfahren nach Anspruch 8,
**dadurch gekennzeichnet, dass**
das Umlenken und Einlagern des schmelzflüssigen Kunststoffmaterials aus der inneren Schicht (34) zum Einbringen des Sichtstreifens (24) in die farbige äußere Schicht (36) nur sequenziell (diskontinuierlich) derart erfolgt, dass der Sichtstreifen (24) nur in der vertikalen Wandung des fertig geblasenen Behälters angeordnet ist.

## Claims

1. Extruder head (10) for producing blow-moulded multi-layered plastic hollow bodies, with a housing (12), on which two or more connections for extruders are provided and are used for supplying molten plastics material, which is circumferentially distributed by way of two or more circumferential distributors (14, 16) to a tubular preform (18) comprising two or more layers, which flows through a cylindrical accumulator chamber (20) and can be delivered by way of a controllable annular die (22), the delivered tubular preform (18) being provided with a viewing strip (24), **characterized in that** on the side of the housing (12), below the circumferential distributors (14, 16) and above the annular die (22), there is provided a further connection (26), through which a hollow tube (28) is inserted into the cylindrical accumulator chamber (20), said hollow tube having on the inside, within the accumulator chamber (20), an upwardly pointing inlet opening (30) and on the outside, in the accumulator chamber (20), a downwardly pointing outlet opening (32), through which plastics material can be diverted from the inner layer (34) and incorporated in the coloured outer layer (36) to introduce the viewing strip (24).

2. Extruder head according to Claim 1, **characterized in that** a screw helix (38), provided with a drive (40), is provided within the hollow tube (28) for transporting plastics material.

3. Extruder head according to Claim 1 or 2, **characterized in that** the hollow tube (28) is formed such that it can be withdrawn from the housing (12) and the corresponding further connection (26) is formed such that it can be closed by means of a fitted-on cover or blind plug.

4. Extruder head according to Claim 1, 2 or 3, **characterized in that** the hollow tube (28) with the screw helix (38) and the drive (40) is formed as a retrofit kit, which can be installed on any existing extruder head.

5. Extruder head according to Claim 1, 2, 3 or 4, **characterized in that** the hollow tube (28) with the screw helix (38) is formed such that it is displaceable in the radial direction.

6. Extruder head according to Claim 5, **characterized in that** the hollow tube (28) with the screw helix (38) is provided with a drive (44) for displacement in the radial direction.

7. Extruder head according to Claim 1, 2, 3, 4, 5 or 6, **characterized in that** the lower housing part (48) with the inserted hollow tube (28) with the screw helix (38) is fastened to the housing (12) such that it can be rotated in both directions of rotation.

8. Method for producing blow-moulded multi-layered plastic hollow bodies, in which two or more molten plastics materials are fed from corresponding extruders into an extruder head (10) and are circumferentially distributed by way of two or more circumferential distributors (14, 16) to a tubular preform (18) comprising two or more layers, after which the multi-layered tubular preform (18) flows through a cylindrical accumulator chamber (20), is provided with a viewing strip (24) and is delivered by way of a controllable annular die (22), **characterized in that**, within the cylindrical accumulator chamber (20), molten plastics material is diverted from the inner layer (34) and incorporated in the coloured outer layer (36) to introduce the viewing strip (24).

9. Method according to Claim 8, **characterized in that** the diversion of the molten plastics material from the inner layer (34) and its incorporation in the coloured outer layer (36) to introduce the viewing strip (24) only take place sequentially (discontinuously), in such a way that the viewing strip (24) is only arranged in the vertical wall of the finished blow-moulded container.

## Revendications

1. Tête d'extrusion (10) destinée à produire des corps creux multicouches moulés-soufflés en matière synthétique et présentant un boîtier (12) sur lequel sont prévus deux ou plusieurs raccordements d'extrudeuse par lesquels une matière synthétique liquide fondue est amenée et est répartie à la périphérie par deux ou plusieurs répartiteurs périphériques (14, 16) pour former une ébauche (18) en forme de manchon flexible en deux ou plusieurs couches qui traverse un espace cylindrique d'accumulation (20) et peut être expulsée par une tuyère annulaire (22) commandée, l'ébauche (18) en forme de manchon flexible expulsée étant dotée d'un ruban d'observation (24), **caractérisée en ce que**
un autre raccord (26) par lequel un tube creux (28) est enfiché dans l'espace cylindrique d'accumulation (20) et qui présente du côté intérieur de l'espace d'accumulation (20) une ouverture d'entrée (30) orientée vers le haut et du côté extérieur de l'espace d'accumulation (20) une ouverture de sortie (32) orientée vers le bas et par laquelle la matière synthétique de la couche extérieure (34) peut être déviée et incorporée pour placer le ruban d'observation (24) dans la couche extérieure colorée (36) est prévu latéralement sur le boîtier (12) en dessous du répartiteur périphérique (14, 16) et au-dessus de la tuyère annulaire (22).

2. Tête d'extrusion selon la revendication 1, **caractérisée en ce qu'**une vis en hélice (38) dotée d'un entraînement (40) est prévue à l'intérieur du tube creux (28) pour transporter la matière synthétique.

3. Tête d'extrusion selon les revendications 1 ou 2, **caractérisée en ce que** le tube creux (28) peut être extrait du boîtier (12) et **en ce que** l'autre raccord (26) concerné est configuré de manière à pouvoir être fermé en y plaçant un couvercle ou un bouchon aveugle.

4. Tête d'extrusion selon les revendications 1, 2 ou 3, **caractérisée en ce que** le tube creux (28) avec sa vis hélicoïdale (38) et son entraînement (40) est configuré comme équipement supplémentaire dans lequel toute tête d'extrusion existante peut être montée.

5. Tête d'extrusion selon les revendications 1, 2, 3 ou 4, **caractérisée en ce que** le tube creux (28) avec sa vis en hélice (38) est configuré de manière à pouvoir coulisser dans la direction radiale.

6. Tête d'extrusion selon la revendication 5, **caractérisée en ce que** le tube creux (28) avec sa vis en hélice (38) est équipé d'un entraînement (44) qui permet de le déplacer dans la direction radiale.

7. Tête d'extrusion selon les revendications 1, 2, 3, 4, 5 ou 6, **caractérisée en ce que** la partie inférieure (48) du boîtier dans lequel le tube creux (28) a été inséré avec sa vis en hélice (38) est fixée sur le boîtier (12) de manière à pouvoir tourner dans les deux sens de rotation.

8. Procédé de fabrication de corps creux multicouches moulés-soufflés en matière synthétique, dans lequel deux ou plusieurs matières synthétiques liquides fondues sont injectées par des extrudeuses respectives dans une tête d'extrusion (10) et sont réparties périphériquement par deux ou plusieurs répartiteurs périphériques (14, 16) pour former une ébauche (18) en forme de manchon flexible en deux ou plusieurs couches, suite à quoi l'ébauche (18) en forme de manchon flexible en plusieurs couches traverse un espace cylindrique d'accumulation (20), est dotée d'un ruban d'observation (24) et est expulsée par une tuyère annulaire (22) commandée,
**caractérisé en ce que**
la matière synthétique liquide fondue est déviée de la couche intérieure (34) à l'intérieur de l'espace cylindrique d'accumulation (20) pour incorporer le ruban d'observation (24) dans la couche extérieure colorée (36).

9. Procédé selon la revendication 8, **caractérisé en ce que** la déviation et l'incorporation de la matière synthétique liquide fondue provenant de la couche intérieure (34) pour incorporer le ruban d'observation (24) dans la couche extérieure colorée (36) n'est réalisée que séquentiellement (de manière discontinue), de telle sorte que le ruban d'observation (24) est disposé uniquement dans la paroi verticale du récipient soufflé terminé.
